# EUROPÄISCHE PATENTSCHRIFT

(11) **EP 1 240 963 B1**
(45) Veröffentlichungstag und Bekanntmachung des Hinweises auf die Patenterteilung: **16.06.2004**
(21) Anmeldenummer: 02002338.8
(22) Anmeldetag: 31.01.2002
(51) Int. Cl.: B23B 31/11

(54) **Verbindungsstelle**
Connecting element
Elément de raccord

(30) Priorität: 14.03.2001 DE 10112966
(43) Veröffentlichungstag der Anmeldung: 18.09.2002
(73) Patentinhaber: MAPAL Fabrik für Präzisionswerkzeuge Dr. Kress KG, D-73431 Aalen (DE)
(72) Erfinder:
(74) Vertreter: Gleiss, Alf-Olav, Dr.jur. Dipl.-Ing.

(56) Entgegenhaltungen:
- WO-A-00/53362
- DE-A- 3 912 503
- DE-U- 9 107 604
- FR-A- 1 489 160

## Beschreibung

Die Erfindung betrifft eine Verbindungsstelle gemäß Oberbegriff des Anspruchs 1. Eine solche Verbindungstelle ist aus Dokument DE-U-9 107 604 bekannt.

Verbindungsstellen der hier angesprochenen Art sind bekannt. Sie dienen dazu, zwei Werkzeugteile miteinander zu verbinden, beispielsweise einen Werkzeughalter, der unmittelbar Teil einer Werkzeugmaschine sein kann oder seinerseits in eine Werkzeugmaschine eingebracht und dort befestigt wird, mit einem Werkzeugkopf, einen Werkzeughalter mit einem Zwischenteil, zwei Zwischenteile miteinander und/oder ein Zwischenteil mit einem Werkzeugkopf. Zur Verbindung der Werkzeugteile wird eine Gewindespindel verwendet, die mit gegenläufigen Gewindeabschnitten versehen sind. Diese greifen in Gewindebereiche der miteinander zu verbindenden Werkzeugteile ein. Bei einer Drehbewegung der Gewindespindel werden die beiden Werkzeugteile fest miteinander verbunden, da die Gewindespindel die Werkzeugteile zusammenzieht, so dass diese sicher aneinander anliegen.

Es hat sich herausgestellt, dass die Verbindung der beiden Werkzeugteile oft deshalb nicht optimal ist, weil die Gewindespindel vor Zusammenbau der beiden Werkzeugteile in einem der selben mehr oder weniger weit eingeschraubt ist und damit keine definierte Spannkraft erzeugt werden kann.

Aufgabe der Erfindung ist es daher, eine Verbindungsstelle zwischen zwei Werkzeugteilen zu schaffen, bei der eine definierte Verspannung der beiden Teile gewährleistet werden kann.

Zur Lösung dieser Aufgabe wird eine Verbindungsstelle vorgeschlagen, die die in Anspruch 1 genannten Merkmale aufweist. Vorteilhafte Ausgestaltungen der erfindungsgemäßen Verbindungsstelle sind in den Unteransprüchen 2-5 beschrieben. Die Verbindungsstelle zeichnet sich dadurch aus, dass die der Verbindung der beiden Werkzeugteile dienende Gewindespindel zumindest in einem Endbereich einen Ansatz aufweist, der in einen Gewindebereich eingreifen kann, der in dem zugehörigen Werkzeugteil vorgesehen ist. Dazu ist der Ansatz mit einem Außendurchmesser versehen, der kleiner ist als der Innendurchmesser des zugehörigen Gewindebereichs. Beim Verbinden zweier Werkzeugteile kann die Gewindespindel in eines der Teile eingesteckt werden, so dass der Ansatz in den Gewindebereich des Werkzeugteils eingreift und die Gewindespindeln in einer definierten Ausgangslage angeordnet und gegebenenfalls auch gehalten wird. Während nun also die Gewindespindel in das erste Werkzeugteil eingesteckt und in einer definierten Lage gehalten ist, kann das zweite Werkzeugteil auf das erste Werkzeugteil aufgesetzt und die Gewindespindel in Rotation versetzt werden. Damit greifen die gegenläufigen Gewindeabschnitte der Gewindespindel in die zugehörigen Gewindebereiche der Werkzeugteile ein, so dass diese fest gegeneinander angepresst und miteinander verbunden werden. Beim Verbinden der beiden Werkzeugteile ist die Gewindespindel durch den Ansatz in einer definierten Lage angeordnet. Es ist also nicht erforderlich, diese wenigstens etwas in das erste Gewindeteil einzuschrauben und verliersicher zu halten, bevor das zweite Werkzeugteil auf das erste aufgesetzt wird. Damit ergibt sich eine definierte Ausgangslage der Gewindespindel und eine vorgegebene Verspannung im Bereich der Verbindungsstelle.

Besonders bevorzugt wird ein Ausführungsbeispiel der Verbindungsstelle, bei dem die Gewindespindel an beiden Enden mit einem Ansatz versehen ist, der in den zugehörigen Gewindebereich der miteinander zu verbindenden Werkzeugteile eingreift. Dazu ist auch hier vorgesehen, den Außendurchmesser kleiner auszubilden als den Innendurchmesser des zugehörigen Gewindebereichs. Durch die an beiden Enden der Gewindespindel vorgesehenen Ansätze können die Werkzeugteile leicht aufeinandergesetzt werden, wobei auf beiden Seiten sichergestellt ist, dass die Gewindespindel eine definierte Ausgangslage einnimmt.

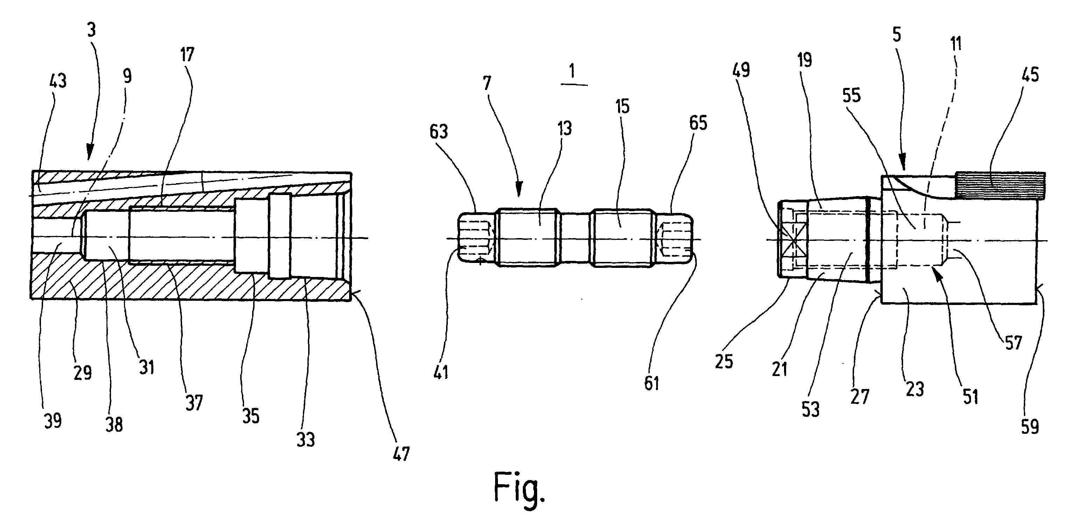

Die Erfindung wird im Folgenden anhand der Zeichnung näher erläutert. Die einzige Figur zeigt eine Verbindungsstelle in Explosionsdarstellung.

Die in der Figur dargestellte Verbindungsstelle 1 weist ein erstes Werkzeugteil auf, das hier als Werkzeughalter 3 ausgebildet ist, außerdem ein zweites Werkzeugteil, das hier als Werkzeugkopf 5 ausgebildet ist. Zwischen den beiden Werkzeugteilen, also zwischen dem Werkzeughalter 3 und dem Werkzeugkopf 5 befindet sich eine Gewindespindel 7, die in Längsrichtung der Werkzeugteile verläuft, hier koaxial zur Mittelachse 9 des Werkzeughalters 3 und zur Mittelachse 11 des Werkzeugkopfs 5. Die Gewindespindel weist zwei gegenläufige Gewindeabschnitte 13 und 15 auf, die als Außengewinde ausgebildet sind und mit als Innengewinde ausgebildeten Gewindebereichen 17 im Werkzeughalter 3 und 19 im Werkzeugkopf 5 zusammenwirken. Der Werkzeugkopf 5 weist einen vorzugsweise konisch ausgebildeten, auch als Haltekegel bezeichneten Vorsprung 21 auf, der sich ausgehend vom Grundkörper 23 des Werkzeugkopfs nach links verjüngt und in einen zylindrischen Abschnitt 25 übergeht. Am Grundkörper 23 ist eine den Vorsprung 21 umgebende Anlagefläche 27 vorgesehen.

Entsprechend ist der Werkzeughalter 3 beziehungsweise dessen Grundkörper 29 mit einer Ausnehmung 31 versehen, die nicht nur Teile der Gewindespindel 7 sondern auch Teile des Werkzeugkopfes 5 aufnimmt. Sie weist einen konisch sich von rechts nach links verjüngenden ersten Abschnitt 33 auf, der so dimensioniert ist, dass im zusammengebauten Zustand der Verbindungsstelle 1 der Vorsprung 21 hier sicher anliegt. Außerdem ist ein zweiter zylindrischer Abschnitt 35 vorgesehen, der den zylindrischen Abschnitt 25 des Werkzeugkopfes 5 aufnimmt. In einem sich an den zweiten Abschnitt 35 anschließenden dritten Abschnitt 37 ist der Gewindebereich 17 vorgesehen, der mit dem linken Gewindeabschnitt 13 der Gewindespindel 7 zusammenwirken kann. An den Gewindeabschnitt 17 schließt sich ein vierter zylindrischer Abschnitt 38 an. Die Ausnehmung 31 weist schließlich noch einen Durchgriff 39 auf, über die ein Werkzeug in die Ausnehmung 31 eingeführt werden kann, um die Gewindespindel 7 in Rotation zu versetzen. Beispielsweise kann ein Mehrkantschlüssel verwendet werden, der in eine entsprechende Ausnehmung 41 in der Gewindespindel 7 eingreift. Schließlich kann in den Grundkörper 29 des als Werkzeughalter 3 ausgebildeten ersten Werkzeugteils noch ein Kühlmittelkanal 43 eingebracht werden, in den ein auch als Schmiermittel dienendes Kühlmittel eingespeist werden kann.

In der Figur ist lediglich angedeutet, dass der Werkzeugkopf 5 mit einer Messerplatte 45 versehen sein kann, die der spanenden Bearbeitung eines Werkstücks dient. Die Ausgestaltung des Werkzeugkopfes ist grundsätzlich irrelevant, so dass hier nicht näher darauf eingegangen wird. Der Kühlmittelkanal 43 ist so angeordnet, dass das Kühlmittel im zusammengebauten Zustand der Verbindungsstelle 1 möglichst im Bereich der Messerplatte 45 austritt und damit den Bearbeitungsbereich kühlt und schmiert.

Um eine exakte Positionierung beziehungsweise Ausrichtung zwischen den Werkzeugteilen zu gewährleisten, kann im Bereich der ringförmigen Anlagefläche 27, die mit einer ringförmigen Anlagefläche 47 an der Stirnfläche des Werkzeughalter 3 zusammenwirkt, wenigstens ein Positionierstift vorgesehen werden. Es ist aber auch möglich, an dem zylindrischen Abschnitt 25 des Werkzeugkopfs 5 wenigstens eine Planfläche 49 vorzusehen, die mit einer hier nicht dargestellten zugehörigen Planfläche im Bereich des zylindrischen zweiten Abschnitts 35 im Werkzeughalter 3 zusammenwirkt und eine Drehausrichtung zwischen den Werkzeugteilen vorgibt. Die Anlageflächen dienen aber auch dazu, ein in den Werkzeughalter 3 eingeleitetes Drehmoment sicher auf den Werkzeugkopf 5 zu übertragen und damit eine positive Mitnahme zu gewährleisten.

In den Vorsprung 21 und den Grundkörper 23 des Werkzeugkopfs 5 ist ebenfalls eine Ausnehmung 51 eingebracht, die der Aufnahme der Gewindespindel 7 dient. Ein erster Abschnitt 53 der Ausnehmung umfasst das Innengewinde 19. An diesen schließt sich ein zweiter zylindrischer Abschnitt 55 an. Schließlich ist noch angedeutet, dass die Ausnehmung 51 sich in einem Durchgriff 57 fortsetzen kann, der sich bis zur Stirnseite 59 des Werkzeugkopfs 5 erstreckt und damit einen Zugang zur Ausnehmung 51 bildet, durch den die Gewindespindel 7 erreichbar ist. Beispielsweise kann auch hier ein Mehrkantschlüssel eingeführt werden, der in eine Ausnehmung 61 der Gewindespindel 7 eingreift, so dass diese in Rotation versetzbar ist.

Die Gewindespindel 7 weist zumindest in einem Endbereich einen ersten Ansatz 63 auf, dessen Außendurchmesser so gewählt ist, dass er in den als Innengewinde ausgebildeten Gewindebereich 17 eingreifen kann. Vorzugsweise ist der Außendurchmesser so auf den Gewindebereich 17 abgestimmt, dass beim Einführen der Gewindespindel 7 in die Ausnehmung 31 der Ansatz 63 im Gewindebereich 17 gehalten wird. Bei dem in der Figur dargestellten Ausführungsbeispiel der Verbindungsstelle 1 ist die Gewindespindel 7 an beiden Enden mit einem Ansatz versehen. Es ist also hier ein zweiter Ansatz 65 vorgesehen, dessen Außendurchmesser so ausgelegt ist, dass dieser in den Gewindebereich 19 im Werkzeugkopf 5 eingeführt werden kann und möglichst dort gehalten wird. Es ist damit möglich, die Gewindespindel 7 in eines der Werkzeugteile einzustecken, wobei zumindest geringe Haltekräfte aufgebaut werden, die die Gewindespindel 7 in der eingesteckten Position sichern.

Der erste Ansatz 63 und der zweite Ansatz 65 schließen unmittelbar an den jeweiligen Gewindeabschnitt 13 beziehungsweise 15 an. Wird also der Ansatz 63 in den Gewindebereich 17 eingesteckt, so liegt das Außengewinde der Gewindespindel 7 am Innengewinde des Werkzeughalters 3 an, so dass sich eine definierte Ausgangslage der Gewindespindel 7 ergibt. Entsprechend liegt beim Einstecken des zweiten Ansatzes 65 in den Gewindebereich 19 das Außengewinde des Gewindeabschnitts 15 am Innengewinde des Gewindebereichs 19 an, so dass sich auch hier eine definierte Ausgangslage der Gewindespindel 7 am Werkzeugkopf 5 einstellt.

Beim Zusammenbau der Verbindungsstelle 1 wird also die Gewindespindel 7 in eines der Werkzeugteile eingesteckt, beispielsweise in den Werkzeughalter 3, wobei dann der erste Ansatz 63 im Gewindebereich 17 angeordnet ist. Nun kann das zweite Werkzeugteil der Verbindungsstelle 1, hier also der Werkzeugkopf 5 mit dem ersten Werkzeugteil, das heißt mit dem Werkzeughalter 3 zusammengesteckt werden, wobei der Vorsprung 21 mit dem zylindrischen Abschnitt 25 des Werkzeugkopfs 5 in die Ausnehmung 31 des Werkzeughalters 3 eingeführt werden. Dabei dringt der zweite Ansatz 65 der Gewindespindel 7 in den Gewindeabschnitt 19 im Werkzeugkopf 5 ein und führt damit die Gewindespindel 7, bis der Gewindeabschnitt 15 am Gewindebereich 19 anschlägt. Damit hat die Gewindespindel 7 auf beiden Seiten eine definierte Ausgangslage, so dass beim Festschrauben der Gewindespindel 7 ein Verkanten und damit eine Beschädigung der Gewinde vermieden wird. Es wird deutlich, dass diese definierte Ausgangslage bereits dann realisierbar ist, wenn nur einer der Ansätze 63 oder 65 vorhanden ist. Besonders leicht ist jedoch die Verbindung der Werkzeugteile dann, wenn zwei Ansätze 63 und 65 an der Gewindespindel 7 vorgesehen sind, die auch beim Zusammenfügen der Werkzeugteile im Bereich der Verbindungsstelle 1 eine gewisse Führung sicherstellen.

Auf jeden Fall ist die Gewindespindel 7 sicher in einem der Werkzeugteile gehalten, während die Verbindungsstelle 1 zusammengefügt wird. Nun kann durch einen der Durchgriffe 39 oder 57 mittels eines geeigneten Werkzeugs die Gewindespindel 7 in Rotation versetzt werden, so dass deren Gewindeabschnitte 13 und 15 in die Gewindebereiche 17 und 19 der Werkzeugteile, also des Werkzeughalters 3 und des Werkzeugkopfs 5 eingreifen und diese in Richtung der Mittelachsen 9 und 11 aufeinander zu verlagern. Dadurch findet der Vorsprung 21 des Werkzeugkopfs 5 sicheren Halt im Bereich des ersten Abschnitts 33 des Werkzeughalters 3. Durch die Planfläche 49 am Vorsprung 21 kann eine definierte Drehposition des Werkzeugkopfs 5 gegenüber dem Werkzeughalter 3 vorgegeben werden.

Beim weiteren Festziehen der Gewindespindel 7 liegt schließlich die Anlagefläche 27 des Werkzeugkopfs 5 sicher an der Anlagefläche 47 des Werkzeughalters 3 an.

Durch die Berührung der Werkzeugteile im Bereich der Anlageflächen 27 und 47 ergibt sich eine hohe Steifigkeit im Bereich der Verbindungsstelle. Außerdem ist eine einfache und sehr genaue Zentrierung der Werkzeugteile mittels des Vorsprungs 21 im ersten Abschnitt 33 gewährleistet. Überdies ist die Verbindungsstelle 1 sehr kompakt und kurzbauend. Es ist möglich, diese auch für Werkzeuge mit einem Durchmesser von 10 mm und weniger zu realisieren.

Im zusammengeschraubten Zustand der Verbindungsstelle 1 bildet die Gewindespindel 7, die im Inneren der Werkzeugteile angeordnet ist, eine Versteifung. Diese kann noch dadurch verbessert werden, dass die Ansätze 63 und 65 der Gewindespindel 7 in entsprechenden Abschnitten der Werkzeugteile fest anliegen. Beispielsweise kann der Ansatz 63 im vierten zylindrischen Abschnitt 38 des Werkzeughalters 3 und der Ansatz 65 der Gewindespindel 7 im zweiten zylindrischen Abschnitt 55 des Werkzeugkopfs 5 fest anliegen, so dass quasi ein Passsitz gegeben und damit eine Stabilisierung der Verbindungsstelle 1 realisiert ist.

Oben wurde bereits gesagt, dass die Verbindungsstelle 1 nicht nur im Bereich der Verbindung eines Werkzeughalters mit einem Werkzeugkopf vorgesehen werden kann, sondern auch im Verbindungsbereich zwischen zwei Zwischenteilen oder im Verbindungsbereich zwischen einem Halter und einem Zwischenteil und einem Werkzeugkopf und einem Zwischenteil. Die Verbindungsstelle ist also für den modularen Aufbau eines Werkzeugs optimal verwendbar. Da auch von einem Werkzeugteil zum anderen aufgrund der vorgegebenen Drehposition Kühlmittelkanäle durchgeleitet werden können, ergeben sich sehr weite Variationsmöglichkeiten. Da das Kühl-/Schmiermittel bis unmittelbar an die Bearbeitungsstelle beziehungsweise Messerplatte 45 herangeführt werden kann, ist die Verbindungsstelle 1 auch im Zusammenhang mit einer sogenannten Minimalmengenschmierung einsetzbar.

Wesentlich ist, dass die Verbindungsstelle 1 auf einfache Weise realisierbar ist: Die Gewindespindel 7 muss lediglich in eines der zu verbindenden Werkzeugteile eingesteckt werden und findet aufgrund des Ansatzes 63 oder 65 dort sicheren Halt. Außerdem ist der Gewindeabschnitt der Gewindespindel in einer definierten Ausgangslage gegenüber dem Gewindebereich in dem zugehörigen Werkzeugteil angeordnet. Es ist nun auf einfache Weise möglich, das zweite Werkzeugteil auf die Gewindespindel aufzustecken, insbesondere dann, wenn diese mit zwei Ansätzen versehen ist, so dass also auch das zweite Werkzeugteil durch den zugehörigen Ansatz geführt wird. Schließlich sind die beiden Werkzeugteile der Verbindungsstelle 1 so zusammengefügt, dass die Gewindespindel auf beiden Seiten eine definierte Ausgangslage einnimmt. Wird nun die Gewindespindel 7 in Rotation versetzt, greifen deren Gewindeabschnitte 13 und 15 gleichzeitig in die Gewindebereiche 17 und 19 der beiden Werkzeugteile, also des Werkzeughalters 3 und des Werkzeugkopfs 5 ein. Jenseits der Gewindebereiche 17 und 19 finden sich in den Werkzeugteilen noch Hohlräume, die im festgezogenen Zustand der Gewindespindel 7 die Ansätze 63 und 65 aufnehmen und gegebenenfalls die oben angesprochene Stabilisierung der Verbindungsstelle 1 ermöglichen. Bei dem Werkzeughalter 3 ist es der vierte Abschnitt 38 der Ausnehmung 31 und beim Werkzeugkopf 5 der zweite Abschnitt 55 der Ausnehmung 51. Die Gewindespindel 7 wird also bei der Herstellung der Verbindungsstelle 1 in keinem der Werkzeugteile bereits anschlagen, während die Verschraubung zwischen Gewindespindel und Werkzeugteilen noch nicht vollständig abgeschlossen ist. Somit ist auf jeden Fall gewährleistet, dass die Werkzeugteile im Bereich der Anlageflächen 27 und 47 mit der maximalen Kraft aneinandergepresst werden.

Die beiden Gewindeabschnitte 13 und 15 der Gewindespindel 7 können, wie in der Figur dargestellt, einen gleichen Außendurchmesser aufweisen und mit Gewindebereichen 17 und 19 in den beiden Werkzeugteilen zusammenwirken, deren Innendurchmesser ebenfalls gleich ist.

Bei einem weiteren Ausführungsbeispiel der Gewindespindel ist es aber möglich, die Gewindeabschnitte 13 und 15 mit unterschiedlich großen Außendurchmessern auszustatten. Die Gewindebereiche haben zwangsläufig eine unterschiedliche Drehrichtung, um bei einer Drehung der Gewindespindel 7 ein Zusammenziehen der Werkzeugteile bei einer ersten Drehrichtung und ein Auseinanderschieben der Werkzeugteile bei einer entgegengesetzten Drehrichtung der Gewindespindel 7 zu gewährleisten. Beim Zusammenbau der Verbindungsstelle 1 muss also die Gewindespindel 7 in richtiger Orientierung in die Werkzeugteile eingesetzt werden, so dass ein Gewindeabschnitt mit Rechtsgewinde mit einem Gewindebereich zusammen wirkt, der ebenfalls ein Rechtsgewinde aufweist. Entsprechend müssen die Linksgewinde miteinander kombiniert werden. Werden nun die Gewindeabschnitte 13 und 15 der Gewindespindel 7 mit unterschiedlichen Gewindedurchmessern versehen, kann eine falsche Orientierung der Gewindespindel 7 leicht vermieden werden. Entsprechend werden natürlich die Ansätze 63 und 65 an die Gewindedurchmesser angepasst, so dass der Gewindebereich mit einem größeren Außendurchmesser auch einen Ansatz mit größerem Außendurchmesser aufweist. Damit kann also der Ansatz des Gewindeabschnitts mit größerem Außendurchmesser nicht in den Gewindebereich des kleineren Gewindes eingeführt werden. Auf diese Weise ist gewährleistet, dass die korrekte Orientierung der Gewindespindel 7 beim Zusammenbau der Verbindungsstelle 1 leicht eingehalten werden kann und Beschädigungen der Gewinde vermieden werden.

## Patentansprüche

1. Verbindungsstelle (1) mit zwei Werkzeugteilen (3,5) und einer in deren Längsrichtung verlaufenden Gewindespindel (7) welche die beiden Werkzeugteile (3, 5) verbindet, wobei die Gewindespindel (7) gegenläufige Gewindeabschnitte (13,15) aufweist, die mit Gewindebereichen (17,19) in den Werkzeugteilen (3,5) zusammenwirken, **dadurch gekennzeichnet, dass** zumindest ein Endbereich der Gewindespindel (7) einen Ansatz (63) aufweist, dessen Außendurchmesser kleiner ist als der Innendurchmesser des zugehörigen Gewindebereichs (17).

2. Verbindungsstelle nach Anspruch 1, **dadurch gekennzeichnet, dass** die Gewindespindel (7) an beiden Enden einen Ansatz (63,65) aufweist, dessen Außendurchmesser kleiner ist als das Innengewinde des zugehörigen Gewindebereichs (17,19).

3. Verbindungsstelle nach Anspruch 1 oder 2, **dadurch gekennzeichnet, dass** die Gewindeabschnitte (13,15) der Gewindespindel (7) eine entgegengesetzte Orientierung aufweisen und entsprechenden Gewindebereichen (17,19) der Werkzeugteile zugeordnet sind.

4. Verbindungsstelle nach einem der vorhergehende Ansprüche, **dadurch gekennzeichnet, dass** die Gewindeabschnitte (13,15) der Gewindespindel (7) unterschiedliche Außendurchmesser haben, und dass die Gewindebereiche (17,19) der Werkzeugteile entsprechend angepasste Innendurchmesser aufweisen.

5. Verbindungsstelle nach einem der vorhergehenden Ansprüche, **dadurch gekennzeichnet, dass** der Außendurchmesser des mindestens einen Ansatzes (63, 65) der Gewindespindel (7) an den Außendurchmesser des zugehörigen Gewindebereichs (17,19) angepasst ist.

## Claims

1. Connection (1) with two tool components (3, 5) and a screw spindle (7) extending in the longitudinal direction thereof which screw spindle connects the two tool components (3, 5), the screw spindle (7) having contra-rotating threaded sections (13, 15) which interact with threaded areas (17, 19) in the tool components (3, 5) **characterised in that** at least one end area of the screw spindle (7) exhibits a shoulder (63) whose outside diameter is smaller than the inside diameter of the corresponding threaded area (17).

2. Connection according to claim 1 **characterised in that** the screw spindle (7) exhibits a shoulder (63, 65) at both ends, the outer diameter of which shoulder is smaller than the internal screw thread of the corresponding threaded area (17, 19).

3. Connection according to claim 1 or 2 **characterised in that** the threaded sections (13, 15) of the screw spindle (7) are oppositely orientated and allocated to corresponding threaded areas (17, 19) of the tool components.

4. Connection according to one of the preceding claims **characterised in that** the threaded sections (13, 15) of the screw spindle (7) have different outside diameters and that the threaded areas (17, 19) of the tools have correspondingly adapted inside diameters.

5. Connection according to one of the preceding claims **characterised in that** the outside diameter of the at least one shoulder (63, 65) of the screw spindle (7) is adapted to the outside diameter of the corresponding threaded area (17, 19).

## Revendications

1. Élément de raccord (1) comprenant deux parties d'outil (3, 5) et une broche filetée (7) reliant les deux parties d'outil (3, 5) et s'étendant dans la direction longitudinale de celles-ci, la broche filetée (7) présentant des sections filetées (13, 15) s'étendant de manière opposée qui coopèrent avec des zones filetées (17, 19) dans les parties d'outils (3, 5), **caractérisé en ce qu'**au moins une zone d'extrémité de la broche filetée (7) présente un insert (63) dont le diamètre extérieur est plus petit que le diamètre intérieur de la zone filetée (17) correspondante.

2. Élément de raccord selon la revendication 1, **caractérisé en ce que** la broche filetée (7) présente sur ses deux extrémités un insert (63, 65) dont le diamètre extérieur est plus petit que le filetage intérieur de la zone filetée (17, 19) correspondante.

3. Élément de raccord selon la revendication 1 ou 2, **caractérisé en ce que** les sections filetées (13, 15) de la broche filetée (7) présentent des sens opposés et sont associées à des zones filetées (17, 19) correspondantes des parties d'outil.

4. Élément de raccord selon l'une quelconque des revendications précédentes, **caractérisé en ce que** les sections filetées (13, 15) de la broche filetée (7) ont des diamètres extérieurs différents et que les zones filetées (17, 19) des parties d'outil présentent des diamètres intérieurs adaptés de façon correspondante.

5. Élément de raccord selon l'une quelconque des revendications précédentes, **caractérisé en ce que** le diamètre extérieur dudit au moins un insert (63, 65) de la broche filetée (7) est adapté au diamètre extérieur de la zone filetée (17, 19) correspondante.
